(19) Europäisches Patentamt
European Patent Office
Office européen des brevets

(11) Veröffentlichungsnummer: **0 114 413**
**B1**

(12) # EUROPÄISCHE PATENTSCHRIFT

(45) Veröffentlichungstag der Patentschrift: **26.11.86**

(51) Int. Cl.⁴: **C 08 G 77/24**

(21) Anmeldenummer: **83113203.0**

(22) Anmeldetag: **29.12.83**

(54) **Fluoralkyloxialkylgruppen aufweisendes Diorganopolysiloxan und dessen Verwendung.**

(30) Priorität: **29.12.82 DE 3248535**

(43) Veröffentlichungstag der Anmeldung: **01.08.84 Patentblatt 84/31**

(45) Bekanntmachung des Hinweises auf die Patenterteilung: **26.11.86 Patentblatt 86/48**

(84) Benannte Vertragsstaaten: **AT BE CH DE FR GB IT LI NL**

(56) Entgegenhaltungen:
**EP-A-0 075 864**
**EP-A-0 075 865**
**DE-A-1 795 580**
**DE-A-3 120 982**
**DE-B-2 016 557**

(73) Patentinhaber: **WACKER- CHEMIE GMBH, Prinzregentenstrasse 22, D-8000 München 22 (DE)**

(72) Erfinder: **Von Au, Günter, Dr. Dipl.- Chem., Rua Regina Badra 105 Jardim dos Estados, BR- 04641 Sao Paulo (BR)**
Erfinder: **Innertsberger, Ernst, Dipl.- Chem., Mehringer Strasse 56, D-8263 Burghausen (DE)**
Erfinder: **Schmidlkofer, Jakob, Ahornweg 3, D-8261 Mehring- Öd (DE)**
Erfinder: **Kaiser, Wolfgang, Dr. Dipl.- Chem., Robert- Koch- Strasse 134, D-8263 Burghausen (DE)**

**EP 0 114 413 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft Fluoralkyloxialkylgruppen aufweisendes Diorganopolysiloxan.

Es wurde bereits gemäß der älteren, nicht vorveröffentlichten DE-A- 31 38 236 vorgeschlagen, Fluoralkyloxialkylgruppen aufweisende Silane herzustellen und diese, sowie davon ableitbare Polymere, als Hydrophobiermittel, Antischaummittel und dergleichen zu verwenden.

Bekannt sind auch der DE-A-1 795 580 als Oleo- und Hydrophobausrüstung dienende Siloxanpolymerisate, die Perflourisopropyloxialkylgruppen aufweisen.

Aufgabe der Erfindung war es nun, Fluoralkyloxialkylgruppen aufweisendes Diorganopolysiloxan bzw. dieses enthaltende Zubereitungen vorzustellen, die den in der Praxis zu stellenden Anforderungen gerecht werden. Insbesondere war es Aufgabe der Erfindung, solches Fluoralkyloxialkylgruppen aufweisendes Diorganopolysiloxan zu finden, das u.a. als Beschichtungsmittel, als Antischaummittel und als Schmiermittel einsetzbar ist und das gegenüber dem auch bereits bisher auf diesen Anwendungsgebieten eingesetzten Diorganopolysiloxan eine verbesserte Lösungsmittelstabilität, ein verbessertes Quellverhalten und, insbesondere bei hohen mechanischen Belastungen eine verbesserte Schmierwirkuno besitzt.

Gelöst wird diese Aufgabe durch Fluoralkyloxialkylgruppen aufweisendes Diorganopolysiloxan.

Gegenstand der Erfindung ist Fluoralkyloxialkylgruppen aufweisendes Diorganopolysiloxan der allgemeinen Formel

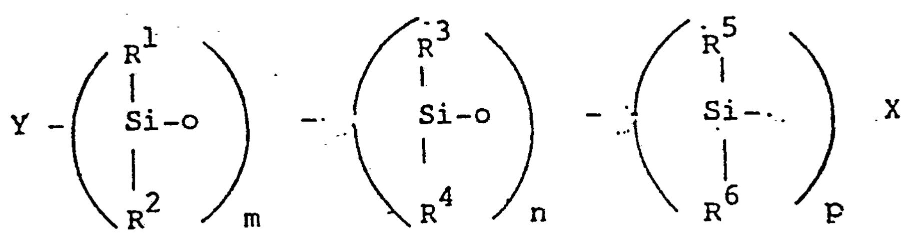

wobei $R^1$ für Fluoralkyloxialkylgruppen der allgemeinen Formel

$-(CH_2)_a-O-C_bF_{2b}H$

steht und

H ein zum Äthersauerstoff ß-standiges Wasserstoffatom bedeutet

a 2, 3 oder 4 und

b eine ganze Zahl von 1 bis 6 bedeutet

$R^2$ für Alkylgruppen mit 1-8 Kohlenstoffatomen, die gegebenenfalls in den endständigen Einheiten eine Amino- oder Thiolgruppe aufweisen, für Alkenylgruppen mit 2-3 Kohlenstoffatomen, für Arylgruppen mit 6-8 Kohlenstoffatomen und für Wasserstoff steht

$R^3$ die

$-(CH_2)_c-C_dF_{(2d-e+1)}Hal_e$

Gruppe bedeutet,

wobei $Hal_e$ ein endständiges Chlor-, Brom- oder Jodatom ist und

c 2, 3 und 4

d eine ganze Zahl von 1-18

e 0 oder 1 sind

$R^4$, $R^5$ und $R^6$ die gleiche Bedeutung wie $R^2$ besitzen

X und Y jeweils gleich oder verschieden sind und kondensationsfähige Endgruppen oder Trialkylsiloxygruppen bedeuten mit Alkylgruppen von 1-6 Kohlen stoffatomen, und

mit der Maßgabe, daß wenn die Summe von $m + n + p = 1$ gesetzt wird

m Werte von 0,05 bis 0,9

n Werte von 0 bis 0,6 und

p Werte von 0,1 bis 0,8

annehmen.

Beispiele für R sind die 1.1.2.2.-Tetrafluorethoxiethyl-die 1.1.2.2.-Tetrafluorethoxipropyl-, die 1.1.2.2.-Tetrafluorethoxibutyl-, die (2-Hydro-hexafluorpropyl)-oxiethyl-, die (2-Hydro-hexafluorpropyl)-oxipropyl-, die (2-Hydrohexafluorpropyl)-oxibutyl-, die (2-Hydro-octafluorbutyl)-oxiethyl- die (2-Hydro-octafluorbutyl)-oxipropyl-, die (2-Hydro-octafluorbutyl)-oxibutyl-, die (2-Hydro-decafluor-pentyl)-oxiethyl-, die (2-Hydro-decafluorpentyl)-oxipropyldie (2-Hydro-decafluorpentyl)-oxibutyl-, die (2-Hydro-dodecafluorhexyl)-oxiethyl-, die (2-Hydro-dodecafluorhexyl)-oxipropyl-, und die (2-Hydro-dodecafluorhexyl)-oxibutyl-Gruppe.

BeispieLe für $R^2$, $R^4$ $R^5$ und $R^6$ sind Wasserstoff, die Methyl-Ethyl-, Propyl-, n-Butyl-, n-Pentyl- n-Hexyl-, n-Heptyl-, n-Octyl- die Aminomethyl-, Aminoethyl-, Aminopropyl-, Aminopentyl-, die Mercaptomethyl-, Mercaptoethyl-, die Vinyl-, Allyl- die Phenyl-, die Tolyl- und die Xylyl-Gruppe.

Beispiele für $R^3$ sind der (Trifluormethyl-ethyl)-, (Trifluormethyl-propyl)-, (Trifluormethyl-butyl)-, (Perfluorethylethyl)-, (Perfluorethyl-propyl)-, (Perfluorethyl-butyl)-, (Perfluoroctylethyl)-, (Perfluoroctyl -propyl)-, (Perfluorpropyl-butyl)-, (Perfluorbutyl-ethyl), (Perfluorbutylpropyl)-, (Perfluorbutyl-butyl)-, (Perfluordecyl -ethyl)-, (Perfluordecyl -propyl)-, (Perfluordecyl -butyl)-, (Perfluorhexyl-ethyl)-, (Perfluorhexyl-propyl)-, (Perfluorhexyl-butyl)-, [ (ω -Chlor-dodecafluorhexyl)-ethyl ] -, [ (ω-Brom-dodecafluorhexyl)-ethyl] -, (Perfluordodecylethyl)- (Perfluorquatordecyl-ethyl)-, (Perfluorhexadecylethyl)-, (Perfluoroctadecyl-ethyl)-Rest.

Beispiele für die Endgruppen X und Y sind die Trimethylsiloxi-Gruppe, die Triethylsiloxi-Gruppe, sowie kondensationsfähige Gruppen, insbesondere Wasserstoff, die OH-Gruppe Alkoxigruppen mit I-5 Kohlenstoffatomen, insbesondere die Methoxi, Ethoxi, Propyloxi, n-Butyloxi, n-Pentyloxi sowie Alkoxialkylgruppen, wie die Ethyloximethylenoxigruppe.

Besonders bevorzugt ist fur $R^1$ die 1.1.2.2-Tetrafluoroxi-propyl- und die 2-Hydro -Hexafluorpropyloxipropylgruppe. Für die Reste $R^2$, $R^4$ und $R^5$ steht insbesondere die Methylgruppe. Für den Rest $R^3$ ist die Perfluorhexylethylgruppe besonders bevorzugt.

Die Herstellung der erfindungsgemäßen Organopolysiloxane erfolgt durch Hydrolyse bzw. Cohydrolyse der entsprechenden Silane und anschlienendes Kondensieren bzw. Äquilibrieren der Hydrolysate.

Typischerweise wird dabei so vorgegangen, daß Silane der Formel $R^1R^2SiCl_2$, $R^5R^6SiCl_2$ und gegebenenfalls $R^3R^4SiCl_2$ im wäßrigen System insbesondere in 3 - 30 Gewichts-%iger NaOH hydrolysiert werden, wobei in der Regel das wäßrige System vorgelegt und Silan zudosiert wird. Grundsätzlich können die Silane getrennt oder gemeinsam als Silan-Gemisch im angestrebten Mol-Verhältnis hydrolysiert werden. Zuweilen wird auch die Arbeitsweise der sogenannten "Gradienten-Hydrolyse" angewandt, wobei ein Hydrolysat eines Silans bzw. eines Silan-Gemisches in einem zweiten Hydrolyse-Schritt mit mindestens einem weiteren Silan cohydrolysiert wird. Üblicherweise werden die Hydrolyse-Reaktionen bei Temperaturen von 20 - 80°C beim Druck der umgebenden Atmosphäre durchgeführt. Die Isolierung der Hydrolysate erfolgt durch Abtrennen der wäßrigen Phase und Reinigen des Hydrolysats durch Neutralisieren, Extrahieren, Trocknen durch Vakuum-Behandlung u. dgl.

Die Kondensation bzw. Äquilibrierung des bzw. der Hydrolysate erfolgt zumeist ohne Lösungsmittel in Gegenwart von Kondensations- bzw. Äquilibrierungskatalysatoren. Beispiele hierfür sind Phosphornitridchloride, quartäre Ammoniumsalze und quartäre Ammoniumhydroxyde wie Tetramethylammoniumhydroxyd Benzyltrimethylammoniumhydroxyd und andere. Die Katalysatoren werden in der Regel in Mengen Von 10-300 Gew-PPm, bezogen auf das Gesamtgewicht der Reaktionsteilnehmer eingesetzt, Die Reaktionstemperaturen betragen zumeist 80-120°C. Bevorzugt wird bei vermindertem Druck, z. B. im Bereich von 67-2000 Pa gearbeitet. Die genannten Reaktionen verlaufen praktisch quantitativ, so daß mit dem Verhältnis der eingesetzten Reaktionsteilnehmer das Molverhältnis der einzelnen im Kondensat bzw. Äquilibrat erwünschten Struktureinheiten festgelegt wird. Nachdem das erwünschte Ausmaß der Kondensation bzw. Äquilibrierung erreicht ist, werden die Reaktionen durch Desaktivierung des Katalysators abgebrochen: Die Desaktivierung erfolgt durch Zugabe von Aminen, wie beispielsweise Triisononylamin sowie durch Hitzebehandlung bei Temperaturen von 130-150°C, insbesondere im Fall der Verwendung guartärer Ammoniumhydroxyde als Äquilibrierungskatalysatoren. Oftmals werden zum Unterbrechen der Kondensations- bzw. Äguilibrierungsreaktionen noch "monofunktionelle" Silane wie Trialkylchlorsilane zugegeben.

Die erfindungsgemänen Fluoralkoxialkylgruppen aufweisenden Organopolysiloxane können sowohl Blockcopolymere (bei denen die einzelnen Strukturelemente in zusammenhängenden Blöcken vorliegen) als auch solche Copolymere sein, bei denen die einzelnen Strukturelemente in statistischer Verteilung vorliegen. Die statistische Verteilung ist bevorzugt.

Ferner können die erfindungsgemäßen Organopolysiloxane auch solche Strukturelemente enthalten, wie sie durch Einäquilibrieren geringer Mengen (z.B. 1-2 Gew.-%, bezogen auf das Gesamtgewicht des Organopolysiloxans) von Phenolen wie tert.-Butyl- und tert.-Octylphenol erhalten werden.

Die erfindungsgemäßen Organopolysiloxane weisen im allgemeinen Viskositäten von 30 - 100 000 $mm^2/s.$, insbesondere 100 - 10 000 $mm^2/s.$ auf. Soweit sie reaktive Gruppen aufweisen, sind sie als Vorprodukte für die Herstellung von Kautschuken Gummis und Harzen einsetzbar.

Die erfindungsgemäßen Organopolysiloxane können als Hydrophobiermittel, als Oleophobiermittel, als Textilhilfsmittel zum Dehäsivmachen von Oberflächen und insbesondere als Schmier- und Antischaummittel verwendet werden. Sie zeichnen sich insbesondere beim Einsatz als Schmierstoffe durch hohe mechanische und thermische Belastbarkeit aus.

Die aus den erfindungsgemäßen Organopolysiloxanen herstellbaren Kautschuke finden u.a. Verwendung als Dichtungs- und Beschichtungsmassen.

Die Erfindung wird nun anhand von Beispielen näher erläutert:

**Beispiel 1**

a) In einem mit Rührer, Tropftrichter und Rückflunkühler versehenen 2 1-Dreihalskolben wurden 687 g 15 Gew.-%iger wäßriger NaOH vorelegt und innerhalb 1 Stunde ein Gemisch aus 115 g (n-Perflourhexyl-ethyl)-methyl-dichlorsilan, 136,5 g (1.1.2.2-Tetrafluorethyl-oxy-propyl)-methyl-dichlorsilan und 64,5 g Dimethyldichlorsilan zugetropft. Die Temperatur des Réaktionsgemisches stieg dabei auf 80°C an. Nach

weiterem 15-minütigem Rühren wurden die Phasen getrennt. Danach wurde das Zielprodukt mit Wasser neutralgewaschen und bei 70°C und 133 Pa Druck getrocknet. Es wurde in einer Ausbeute von 216 g (85 %) ein in den endständigen Einheiten je eine OH-Gruppe aufweisendes Co-Hydrolysat erhalten. Viskosität 170 $mm^2$/sec.

b) 217 g des Co-Hydrolysats gemäß a) und 9 g eines mit Trimethylsiloxigruppen endblockierten, 10 Dimethylsiloxigruppen aufweisenden Silikonöls wurden mit 0,136 ml einer 25 Gew.-%-igen Lösung von $(PNCl_2)_x$ in Methylenchlorid versetzt und bei 100°C und 133 Pa Druck 3 Stunden gemischt. Danach wurde entspannt, mit 0,271 ml Triisononylamin versetzt und nach 15-minütigem Mischen zum Abtrennen flüchtiger Bestandteile auf 130°C bei 133 Pa Druck erhitzt.

Es wurde in einer Ausbeute von 95 % ein klares Öl erhalten. Viskosität: 5000 $mm^2$/sec.; Brechungsindex $n_D^{20}$ 1,3730.

Das Produkt wies eine statistische Verteilung der einzelnen Strukturelemente auf mit 40 Mol-% Dimethylsiloxi-, 20 Mol-% (Perflourhexyl-ethyl)-methyl-siloxi- und 40 Mol-% (1.1.2.2-Tetraflourethyl-oxi-propyl)-methyl-siloxi-einheiten.

**Beispiel 2**

a) Es wurden analog der Arbeitsweise gemäß Beispiel 1 a) 533 g einer 15 Gew.-%-igen wäßrigen NaOH vorgelegt und 273 g (1.1.2.2-Tetrafluorethyl-oxi-propyl)-methyl-di-chlorsilan innerhalb von 20 Minuten zugetropft. Nach weiteren 15-minütigem Rühren wurden die Phasen getrennt, das Zielprodukt mit Wasser neutralgewaschen und bei 100°C und 133 Pa Druck getrocknet. Es wurde in einer Ausbeute von 246 g (90 %) ein in den endständigen Einheiten je eine OH-Gruppe aufweisendes Hydrolysat der Viskosität 200 $mm^2$/sec. erhalten.

b) 218 g Hydrolysat gemäß a), 74 g eines in den endständigen Einheiten je eine OH-Gruppe aufweisenden Dimethylpolysiloxans der Viskosität 100 mm2/sec. und 3 g eines mit Trimethylsiloxigruppen endblockierten Dimethylpolysiloxans der Viskosität 20 $mm^2$/sec. wurden in einem Mischer mit Vakuumanschluß bei 100°C und 133 Pa Druck in Gegenwart von 0,1 ml einer 40 Gew.-%-igen methanolischen Lösung von Benzyltrimethylammoniumhydroxid äquilibriert. Nach 3 Stunden wurde entspannt und dem Reaktionsgemisch 0,2 ml Trimethylchlorsilan zugegeben. Nach weiterem 15-minütigem Mischen wurde das produkt noch 2 h bei einer Temperatur von 130 -C und einem Druck von 133 Pa gehalten.

Es wurde in einer Ausbeute von 98 % ein Äquilibrat erhalten mit einer Viskosität von 5000 $mm^2$/sec. und einem Brechungsindex $n_D^{20}$, 1,3920. Das Produkt wies eine statistische Verteilung von 50 Mol-% (1.1.2.2-Tetrafluorethyl-oxi-propyl)-methylsiloxi- und 50 Mol-% Dimethylsiloxigruppen auf.

**Beispiel 3**

a) Es wurde nech der Arbeitsweise qemäß Beispiel 1 a) ein Co-Hydrolysat gewonnen aus 185 g (n-Perfluorhexylethyl)methyl-dichlorsilan, 109 g (1.1.2.2-Tetrafluorethyl-oxi-ethyl)-methyl-dichlorsilan und 52 g Dimethyldichlorsilan.

Die Ausbeute betrug 270 g (96%); Viskosität: 200 $mm^2$/sec.; $n_D^{20}$ = 1,3640.

b) 210 g des Co-Hydrolysats gemäß a) wurden mit 9 g eines mit Trimethylsiloxigruppen endblockierten, 10 Dimethylsiloxigruppen aufweisenden Silikonöls in Gegenwart von 0,073 ml einer 25 Gew.-%-igen $(PNCl_2)_x$-Lösung in Methylenchlorid nach der Arheitsweise gemäß Beispiel 1 b) äquilibriert und isoliert. Das in 95 %-iger Ausbeute gewonnene Äquilibrat wurde mit 2,2 g tert. Octylphenol und 0,073 ml 25 Gew.-%-iger $(PNCl_2)_x$-Lösung in Methylenchlorid versetzt. und bei 150°C und 0,1 MPa Druck 2 stunden gerührt. Danach wurde zur Desaktivierung des Äuqilibrierungskatälysators 0,29 ml Triisononylamin zugegeben und nach weiterem 15-minütigem Rühren bei 130°C und 133 Pa Druck die flüchtigen Bestandteile entfernt. Es verblieb als Zielprodukt ein klares Öl: Viskosität 5000 $mm^2$/sec.; $n_D^{20}$ 1,3650. Das Produkt wies eine statistische 1: 1: 1-Verteilung der einzelnen Strukturelemente auf (Dimethylsiloxi-, (1.1.2.2-Tetrafluorethyl-oxi-propyl)-methyl-siloxi-, (n-Perfluorhexyl-ethyl)-methyl-siloxi-Gruppen).

Das Produkt wurde auf Thermostabilität und Flüchtigkeit untersucht: hierzu wurden jeweils Proben von 3 g des Produkts in Tiegel gefüllt, deren Abmessungen so gewählt waren, daß die Proben eine Oberfläche von 20 $cm^2$ aufwiesen und auf eine Temperatur von 200°C gebracht. Der Gewichtsverlust betrug nach 240 Stunden lediglich 2,2 Gew.-%. Auch nach 1000 Stunden unter den obigen Bedingungen war keine Gelierungsreaktion festzustellen.

**Beispiel 4**

a) Es wurden 166 g einer 15 Gew -%-igen wäßrigen $N_aOH$ in einem mit Rührer Tropftrichter und Rückflußkühler ausgerüsteten Dreihalskolben vorgelegt und 100 g (1.1.2.2-Tetrafluorethyl-oxi-propyl)-methyldichlorsilan unter Rühren zugetropft. Die Isolierung des Hydrolysats erfolgte wie in Beispiel 1 a) beschrieben. Es wurden 90 g eines in den endständigen Einheiten je eine OH-Gruppe aufweisenden Hydrolysats erhalten. Viskosität 200 $mm^2$/sec.

b) In der Arbeitsweise analog a) wurden 506 g (n-Perfluorhexyl-ethyl)-methyl-dichlorsilan hydrolysiert und isoliert. Viskosität 600 $mm^2$/sec.

c) 185 g eines in den endständigen Einheiten je eine OH-Gruppe aufweisenden Dimethylpolysiloxans der Viskosität 100 $mm^2$/sec., 406 g des Hydrolysats gemäß b), 68 g des Hydrolysats gemäß a), 19 g mit Trimethylsiloxigruppen endblockierten Dimethylpolysiloxans der Viskosität 5 $mm^2$/sec. und 0,51 ml einer 40 Gew.-%-igen methanolischen Lösung von Benzyltrimethylammoniumhydroxid wurden bei 100°C und 133 Pa Druck 3 stunden gerührt. Danach wurde entspannt und 1,16 ml Trimethylchlorsilan zugegeben. Nach weiterem 15-minütigem Rühren wurde das Reaktionsgemisch noch 2 Stunden bei 130°C und Druck gehalten. Als Zielprodukt fiel in einer Ausbeute von 96 % ein Öl der Viskosität 1000 mm2/sec. an. $n_D^{20}$ 1,3640.

Das Äquilibrat enthielt 66 Mol-% Dimethylsiloxieinheiten, 8 Mol-% (n-Perfluorhexyl-ethyl)-methylsiloxieinheiten und 26 Mol-% (1.1.2.2-Tetrafluorethyl-oxi-propyl)-methylsiloxieinheiten.

**Beispiel 5**

33 g des Hydrolysats gemäß 4 a) (Viskosität 200 $mm^2$/sec.), 61 g des Nydrolysats gemäß 4 b) (Viskosität 600 $mm^2$/sec.), 178 g eines in den endständigen Einheiten je eine OH-gruppe aufweisenden Dimethylpolysiloxans der Viskosität 100 $mm^2$/ sec., 0,3 g eines in jeder vierten Einheit eine Vinyl-methylsiloxigruppe aufweisenden, mit Trimethylsiloxigruppen endblockierten Dimethylpolysiloxans der Viskosität 30 $mm^2$/sec., 0,1 g eines in den endständigen Einheiten je eine Vinyl-dimethyl-siloxigruppe aufweisenden Dimethylpolysiloxans der Viskosität 100 $mm^2$/sec. und 0,1 ml einer 40 Gew.-%-igen methanolischen Lösung von Benzyltrimethylammoniumhydroxid wurden bei 100°C und 133 Pa drei Stunden in einem Laborkneter gemischt. Danach wurde entspannt und 0,2 ml Vinyldimethylchlorsilan zugegeben. Schließlich wurde das Reaktinsgemisch noch 2 Stunden bel 130°C und 133 Pa Druck gehalten. Es wurde ein Festpolymer der Viskosität 15 000 000 $mm^2$/sec. erhalten.

In den folgenden Beispielen wird das Schaumverminderungsvermögen und die Schmierwirkung der gemäß den Beispielen 1 bis 4 erhaltenen Produkte untersucht. Im folgenden wird

das Produkt gemäß Beispiel 1 mit A
das Produkt gemäß Beispiel 2 mit B
das Produkt gemäß Beispiel 3 mit C
das Produkt gemäß Beispiel 4 mit D
ein handelsübliches Fluorsilikonöl mit 90 Mol-% 1.1.1.-Trifluorpropyl-methylsiloxieinheiten und 10 Mol-% Dimethylsiloxieinheiten (Viskosität 1000 mmz/sec.) mit V
bezeichnet.

**Beispiel 6**

Es wurde das Löseverhalten der gemäß den Beispielen 1 bis 4 erhaltenen Organopolysiloxane untersucht. Hierzu wurden die Komponenten so vermischt, daß jeweils eine 5 Gew-%-ige Lösung der Proben in den in der Tabelle 1 genannten Lösemitteln erhalten werden sollte.

**Tabelle 1**

| Lösemittel | V | A | B | C | D |
|---|---|---|---|---|---|
| Ethylenglykol | – | – | – | – | – |
| Methylethylketon | + | + | ± | + | ± |
| Methylisobutylketon | + | + | ± | + | ± |
| Benzin | – | – | ± | – | + |
| Frigen 113 | – | + | + | + | + |
| Isopropanol | – | – | – | – | – |
| Perchlorethylen | ± | – | ± | ± | ± |
| Ethylglykolacetat | + | ± | + | ± | – |
| Essigsäureethylester | + | + | ± | – | – |

+ = löslich
± = dispergierbar bzw. z.T. löslich
- = unlöslich-

**Beispiel 7**

Es wurde das Entschäumungsvermögen der gemäß den Beispielen 1 bis 4 beschriebenen Organopolysiloxane untersucht: hierzu wurden in einem mit Schliffstopfen versehenen 250 ml-Zylinder 100 ml einer 2,5 Gew.-%-igen Lösung eines mit Trimethylsiloxigruppen endblockierten Dimethylpolysiloxans der Viskosität 1000 $mm^2$/sec. in Perchlorethylen vorgelegt. Diese Lösungen wurden jeweils mit 0,25 ml einer 10 %-igen Lösung der auf Entschäumungsvermögen zu prüfenden Proben in einem 1: 1-Gemisch aus Essigsäureethylester und Frigen 113 versetzt. Entsprechend betrug der Gehalt an auf Entschaumungsvermögen zu prüfendem Fluorsilikonöls 0,01 Gew.-%.

Die so erhaltenen Probemischungen wurden jeweils zehnmal kräftig in vertikaler Richtung geschüttelt und anschließend auf Schaumhöhe und Schaumzerfallzeit bonitiert.

Die Ergebnisse sind der folgenden Tabelle 2 zu entnehmen.

**Tabelle 2**

| Zusatz | Schaumhöhe nach Schütteln | Schaumzerfall in sec |
|---|---|---|
| Keiner (Blindwert) | 180 | 60 |
| V | 120 | 15 |
| A | 106 | 11 |
| B | 105 | 5 |
| C | 110 | 7 |
| D | 112 | 10 |

**Beispiel 8**

Es wurde das Schaumdämpfungsverhalten der gemäß den Beispielen 1 bis 4 beschriebenen Öle unter Siedebedingungen untersucht: hierzu wurden 250 ml der bereits gemäß Beispiel 7 beschriebenen Testlösungen in einen 1 l-Kolben mit Destillationsaufsatz gegeben, mit jeweils 3 Siedesteinchen versetzt und zum lebhaften Sieden erhitzt. Die Lösungen wurden unter Siedebedingungen auf Schaumbildung bonitiert. Die Ergebnisse sind der Tabelle 3 zu entnehmen.

**Tabelle 3**

| Zusatz | Schaumhöhe / Bemerkung |
|---|---|
| Keiner (Blindwert) | Sofortiges Überschäumen bei Erreichen der Siedetemperatur |
| V | bis 16 mm Schaum zu Siedebeginn, bei fortschreitender Destillation leichter Schaumrückgang |
| A | bis 10 mm Schaum zu Siedebeginn, dann relativ große Schaumblasen, die rasch zerplatzen |
| B | bis 8 mm Schaum zu Siedebeginn, dann rascher Abbau, auf Dauer 2 bis 3 mm Schaum |
| C | bei Siedebeginn einige einzelne Schaumblasen, dann praktisch schaumfreie Destillation |
| D | bis 13 mm Schaum nur bei Siedebeginn, dann Abklingen der Schaumbildungsneigung |

**Beispiel 9**

Es wurde die Schmierwirkung der gemäß den Beispielen 1 bis 4 erhaltenen Produkte im Shell-4-Kugelapparat untersucht.

Es wird in der folgenden Tabelle 4 die maximale Laststufe als VAK-Schweißkraft (nach DIN 51350) angegeben, bei der die Prüfkugeln im Apparat verschweißten.

**Tabelle 4**

| | VKA-Schweißkraft (N) |
|---|---|
| V | unter 2.000 N |
| A | 3.600 - 3.800 N |
| B | 3.200 - 3.400 N |
| C | 3.400 - 3.600 N |
| D | 2.600 - 2.800 N |

**Beispiel 10**

Es wurde die Schmierwirkung der erfindungsgemäßen Organopolysiloxane auf der Almen-Wieland-Fettprüfmaschine untersucht. Hierbei wurde einem Gleitlager, das aus zwei auf Abstand gehaltenen Halbschalen und einer Stahlwelle gebildet war und das in einem Bad aus dem zu untersuchenden Schmierstoff lief, eine Belastung aufgegeben und die Reibungskraft, die zwischen den Lagerschalen und der Welle auftrat, gemessen. Die an dieser Anordnung maximale Belastung betrug 20.000 N, die maximal mögliche Reibungskraft 3.500 N.

Die Schmierwirkung wird in der folgenden Tabelle 5 als Reibungszahl bei maximaler Belastung (Verhältnis von Reibungskraft: Anpreßdruck) dargestellt. Die Schmierwirkung ist umso besser, je kleiner diese Kennzahl ist.

**Tabelle 5**

| Schmierstoff | Reibungskraft / Anpreßdruck | Reibungszahl bei max. Belastung |
|---|---|---|
| V | 1.000 / 2.000 | 0,500 |
| A | 3.500 / 8.500 | 0,411 |
| B | 3.500 / 16.000 | 0,184 |
| C | 3.400 / 20.000 | 0,170 |
| D | 3.500 / 20.000 | 0,368 |

**Beispiel 11**

Es wurde das Quellungsverhalten der erfindungsgemäßen Öle gemäß Beispiel 1 und 2 gegenüber einer Dichtungsmasse auf Basis von hochtemperaturvernetztem Diorganopolysiloxan der Shore-Härte 70 untersucht. Der genannte Silikongummi war in der Form eines 2 mm dicken Dichtungsringes vom Durchmesser 16 mm ausgebildet. Der Dichtring wurde 100 Stunden bei einer Temperatur von 160° C in den Testsubstanzen gehalten. Diese Testsubstanzen waren als Fette formuliert mit Lithiumstearat als Konsistenzgeber. Die Formulierungen waren so gewählt daß die Fette, gemessen nach DIN 51804 eine Konsistenz von 270 (1/10 mm) aufwiesen.

Die Dichtringe wurden nach der Temperaturbehandlung auf Gewichts- und Volumenzunahme bonitiert. Die Ergebnisse sind in der nachfolgenden Tabelle 6 zusammengestellt.

**Tabelle 6**

| Schmierstoff auf Basis von Lithiumstearat | Gewichtszunahme in Gew.-% | Volumenzunahme in % |
|---|---|---|
| + V | 0,45 | 2,75 |
| + A | 0,39 | 2,25 |
| + B | 0,33 | 1,93 |

**Patentansprüche**

**für die Vertragsstaaten BE CH DE FR GB IT LI NL**

1. Fluoralkyloxjalkylgruppen aufwei sendes Diorganopolysiloxan der allgemeinen Formel

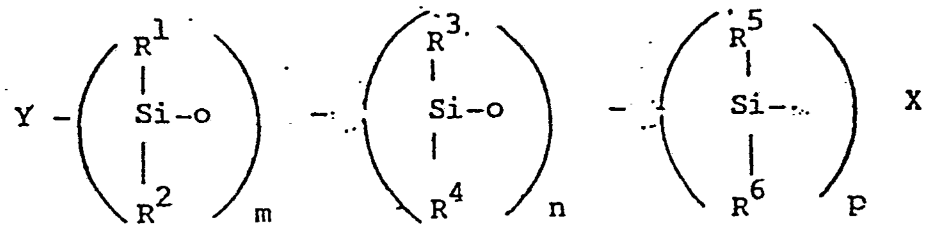

wobei $R^1$ für Fluoralkyloxialkylgruppen der allgemeinen Formel
$-(CH_2)_a-O-C_bP_{2b}H$
steht und
H ein zum Äthersauerstoff ß-ständiges Wasserstoffatom bedeutet
a 2, 3 oder 4 und
b eine ganze Zahl von 2 bis 6 bedeutet
$R^2$ für Alkylgruppen mit 1-8 Kohlenstoffatomen, die gegebenenfalls in den endständigen Einheiten eine Amino- oder Thiolgruppe aufweisen für Alkenylgruppen mit 2-3 Kohlenstoffatomen, für Arylgruppen mit 6-8 Kohlenstoffatomen und für Wasserstoff steht
$R^3$ die
$-(CH_2)_c-C_dF(2d-e+1)Hal_e$ Gruppe bedeutet,
wobei $Hal_e$ ein endständiges Chlor- Brom- oder Jodatom ist und
c 2, 3 und 4
d eine ganze Zahl von 1-18
e 0 oder 1 sind
$R^4$ $R^5$ und $R^6$ die gleiche Bedeutung wie $R^2$ besitzen
X und Y jeweils gleich oder verschieden sind und kondensationsfähige Endgruppen oder Trialkylsiloxygruppen bedeuten mit Alkylgruppen von I-6 Kohlenstoffatomen, und
mit der Maßgabe daß wenn die Summe von $m + n + p = 1$ gestetzt wird
m Werte von 0,05 bis 0.9
n Werte von 0 bis 0,6 und
p Werte von 0,1 bis 0 8
annehmen.

2. Verwendung der Diorganopolysiloxane nach Anspruch 1, als Schmier- und Antischaummittel.

**Patentansprüche**

**für den vertragsstaat AT**

Verwendung von Fluoralkyloxialkylgruppen aufweisendem Diorganopolysiloxan der allgemeinen Formel

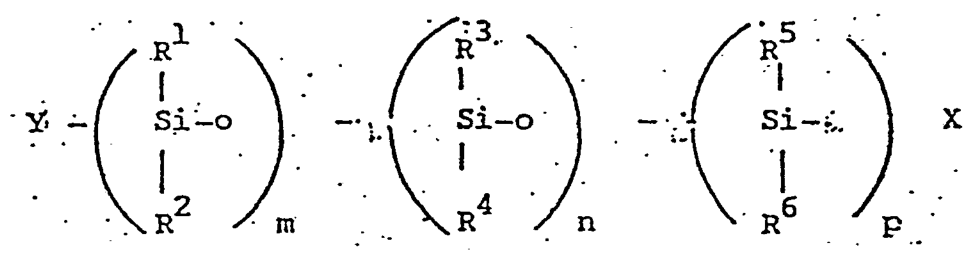

wobei R 1 fur Fluoralkyloxialkylgruppen der allgemeinen Formel
$-(CH_2)_a$ $-C-C_bF_{2b}H$
steht und
H ein zum Äthersauerstoff ß-ständiges Wasserstoffatom bedestet
a 2, 3 oder 4 und
b eine ganze Zahl von 2 bis 6 bedeutet
$R^2$ für Alkylgruppen mit I-8 Kohlenstoffatomen, die gegebenenfalls in den endständigen Einheiten eine Amino- oder Thiolgruppe aufweisen, für Alkenylgruppen mit 2-3 Kohlenstoffatomen, für Arylgruppen mit 6-8 Kohlenstoffatomen und für Wasserstoff steht
$R_3$ die
$-(CH_2)_c-C_dF_{(2d-e+1)}Hal_e$
Gruppe bedeutet,
wobei $Hal_e$ ein endständiges Chlor-, Brom- oder Jodatom ist und
c 2, 3 und 4
d eine ganze Zahl von 1-18
e 0 oder 1 sind
$R^4$ $R^5$ und $R^6$ die gleiche Bedeutung wie $R^2$ besitzen,
X und Y-jeiweils gleich oder verschieden sind und kondensationsfähige Endgruppen oder Trialkylsiloxygruppen bedeuten mit Alkylgruppen von I-6 Kohlenstoffatomen, und,
mit der Maßgabe, daß wenn die Summe von $m + n + p = 1$ gesetzt wird
m Werte von 0,05 bis 0,9
n Werte von 0 bis 0,6 und
p Werte von 0,1 bis 0,8
annehmen
als Schmier- und Antischaummittel.

## Claims

**for the contracting states:BE CH DE FR GB IT LI NL**

1. Diorganopolysiloxane, containing fluoroalkyloxyalkyl groups, of the general formula

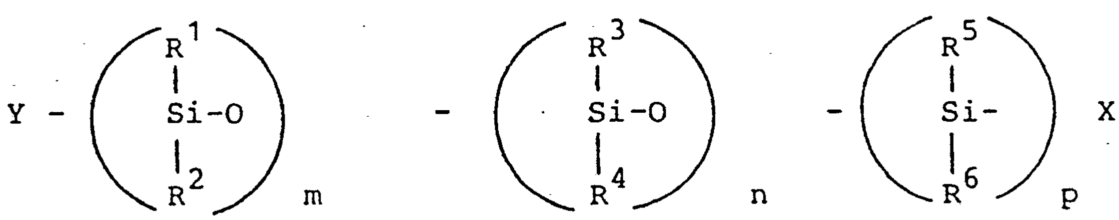

in which $R^1$ represents fluoroalkyloxyalkyl groups of the general formula
$-(CH_2)_a$ $-O-C_bF_{2b}H$
wherein
H represents a hydrogen atom in the ß-position with respect to the ether oxygen,
a represents 2, 3 or 4 and
b represents an integer from 2 to 6;
$R^2$ represents alkyl groups having from 1 to 8 carbon atoms, which optionally have an amino group or a thiol group in the terminal units, alkenyl groups having 2 or 3 carbon atoms, aryl groups having from 6 to 8 carbon atoms, or hydrogen;
$R^3$ represents the group
$-(CH_2)_c-C_dF_{(2d-e+1)}Hal_e$
wherein
$Hal_e$ represents a chlorine, bromine or iodine
atom in the terminal position, and
c represents 2, 3 or 4,
d represents an integer from 1 to 18, and
e represents 0 or 1;

$R^4$, $R^5$ and $R^6$ have the same meaning as $R^2$, X and Y are in each case the same or different and represent condensable terminal groups or trialkylsiloxy groups with alkyl groups having from 1 to 6 carbon atoms, with the proviso that, if the sum $m + n + p = 1$,

m has a value of from 0.05 to 0.9,

n has a value of from 0 to 0.6 and

p has a value of from 0.1 to 0.8.

2. Use of the diorganopolysiloxanes according to claim 1 as lubricants and anti-foam agents.

**Claims**

**for the contracting state: AT**

Use of diorganopolysiloxane, containing fluoralkyloxyalkyl groups, of the general formula

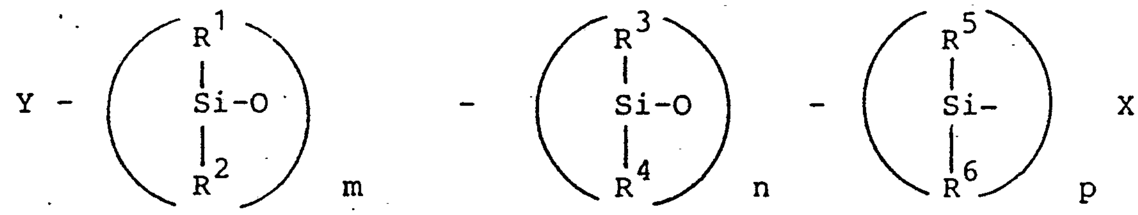

in which $R^1$ represents fluoroalkyloxyalkyl groups of the general formula

$-(CH_2)_a-O-C_bF_{2b}H$

wherein

H represents a hydrogen atom in the ß-position with respect to the ether oxygen,

a represents 2, 3 or 4 and

b represents an integer from 2 to 6;

$R^2$ represents alkyl groups having from 1 to 8 carbon atoms, which optionally have an amino group or a thiol group in the terminal units, alkenyl groups having 2 or 3 carbon atoms, aryl groups having from 6 to 8 carbon atoms, or

$R^3$ represents the group

$-(CH_2)_c-C_dF_{(2d-e+1)}Hal_e$

wherein

$Hal_e$ represents a chlorine, bromine or iodine atom in the terminal position, and

c represents 2, 3 or 4,

d represents an integer from 1 to 18, and

e represents 0 or 1;

$R^4$, $R^5$ and $R^6$ have the same meaning as $R^2$, X and Y are in each case the same or different and represent condensable terminal groups or trialkylsiloxy groups with alkyl groups having from 1 to 6 carbon atoms, with the proviso that, if the sum $m + n + p = 1$,

m assumes values of from 0.05 to 0.9,

n assumes values of from 0 to 0.6 and

p assumes values of from 0.1 to 0.8,

as lubricants and anti-foaming agents.

**Revendications**

**Pour les etats contractants:BE,CH, DE, FR, GB, IT, LI, NL**

1. Polydiorganosiloxane contenant des groupes fluoralkyloxyalkyle, de formule générale

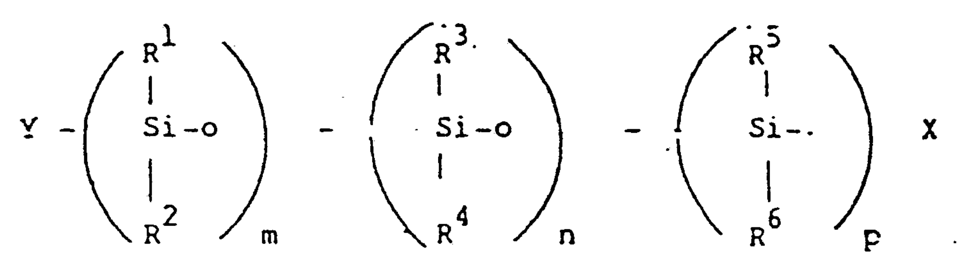

dans laquelle $R^1$ représente des groupes fluoralkyloxyalkyle de formule générale
$-(CH_2)_a-O-C_bF_{2b}H$
et
H est un atome d'hydrogène en position ß par rapport à l'oxygène de l'éther,
a vaut 2, 3 ou 4, et
b est un nombre entier de 2 à 6,
$R^2$ représente des groupes alkyle ayant de 1-8 atomes de carbone, qui possédent éventuellement un groupe amino ou thiol dans les motifs terminaux, des groupes alcényle ayant 2-3 atomes de carbone, des groupes aryle ayant de 6-8 atomes de carbone, et l'hydrogéne,
$R^3$ est le groupe
$-(CH_2)_c-C_dF_{(2d-e+1)}Hal_e$
dans lequel $Hal_e$ est un atome de chlore, de brome ou d'iode terminal, et
c vaut 2, 3 ou 4,
d est un nombre entier de 1 à 18
e vaut 0 ou 1
$R^4$, $R^5$ et $R^6$ ont la même signification que $R^2$,
X et Y sont chacun identiques ou différents et représentent des groupes terminaux condensables ou des groupes trialkylsiloxy, avec des groupes alkyle ayant de 1 à 6 atomes de carbone, et
à la condition que, quand la somme $m + n + p$ est fixée égale à 1,
m prenne des valeurs de 0,05 à 0,9,
n prenne des valeurs de 0 à 0,6 et
p prenne des valeurs de 0,1 à 0,8.

2. Utilisation des polydiorganosiloxanes selonla revendication 1 comme lubrifiant et agent antimousse.

**Revendications**

**pour l'etat contractant AT**

Utilisation, comme lubrifiant et agent antimousse, d'un polydiorganosiloxane contenant des groupes fluoralkyloxyalkyle, de formule générale

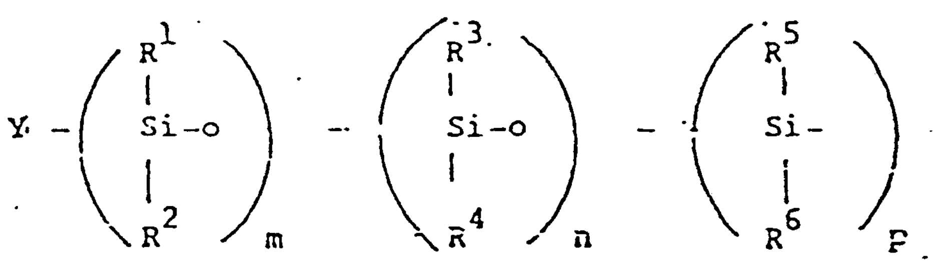

dans laqulle $R^1$ représente des groupes fluoralkyloxyalkyle de formule générale
$-(CH_2)_a-C-C_bF_{2b}H$
et
H est un atome d'hydrogéne en position ß par rapport à l'oxygéne de l'éther
a vaut 2, 3 ou 4, et
b est un nombre entier de 2 à 6,
$R^2$ represente des groupes alkyle ayant de 1 a 8 atomes de carbone, qui contiennent éventuellement un groupe amino ou thiol dans les motifs terminaux, des groupes alcényle ayant 2-3 atomes de carbone, des groupes aryle ayant de 6-8 atomes de carbone, et l'hydrogéne,
$R^3$ est le groupe
$-(CH_2)_c-C_dF_{(2d-e+1)}Hal_e$
dans lequel $Hal_e$ est un atome de chlore, de brome ou d'iode terminal, et
c vaut 2, 3 ou 4,
d est un nombre entier de 1 à 18
e vaut 0 ou 1
$R^4$, $R^5$ et $R^6$ ont la même signification que $R^2$,
X et Y sont chacun identiques ou différents et représentent des groupes terminaux ou des groupes trialkylsiloxy condensables, avec des groupes alkyle ayant 1-6 aromes de carbone, et,
à la condition que, quand la somme $m + n + p$ est fixée égale à 1,
m prenne des valeurs de 0,05 à 0,9
n prenne des valeurs de 0 à 0,6 et
p prenne des valeurs de 0,1 à 0,8.